# FASCICULE DE BREVET EUROPEEN

(11) **EP 2 164 920 B1**
(45) Date de publication et mention de la délivrance du brevet: **26.10.2011**
(21) Numéro de dépôt: 08774168.2
(22) Date de dépôt: 20.06.2008
(51) Int. Cl.: C09K 8/502, C09K 8/565, C09K 8/64

(54) **FORMULATION D'HUILE POUR LA PREVENTION DES VENUES D'EAU DANS LES FORMATIONS SOUTERRAINES.**
ÖLFORMULIERUNG ZUR VORBEUGUNG VON WASSEREINBRUCH IN UNTERIRDISCHE FORMATIONEN
OIL FORMULATION FOR PREVENTING WATER PENETRATION IN UNDERGROUND FORMATIONS

(30) Priorité: 05.07.2007 FR 0704850
(43) Date de publication de la demande: 24.03.2010
(73) Titulaire: Rhodia Opérations, 93306 Aubervilliers (FR)
(72) Inventeur: CADIX, Arnaud, F-75017 Paris (FR)
(74) Mandataire: Seugnet, Jean Louis
(86) Numéro de dépôt international: PCT/EP2008/057863
(87) Numéro de publication internationale: WO 2009/003857

(56) Documents cités:
- DE-C1- 10 218 718
- FR-A- 2 286 843
- US-A- 4 454 252

## Description

La présente invention concerne l'utilisation d'une formulation d'huile dans le domaine de l'industrie du pétrole, notamment pour la prévention des venues d'eau. La formulation selon l'invention est notamment destinée à être injectée dans les formations souterraines, telles que les puits injecteurs ou les puits de production.

Lors de la production d'hydrocarbures, de l'eau est injectée par des puits injecteurs, afin de balayer les roches pétrolifères, également appelés réservoirs, dans le but de pousser le pétrole vers un puit de production. Avec la maturation des réservoirs, les zones contenant majoritairement de l'eau se développent. Le balayage se fait alors préférentiellement par ces zones et la production de pétrole diminue fortement au profit de la production d'eau.

Il existe quelques solutions techniques peu fiables pour empêcher ce phénomène, mais les résultats restent souvent aléatoires compte tenu du développement des puits complexes. En effet, le nombre grandissant de champs matures, le développement des puits complexes, tels que les puits horizontaux, sous-marins, ou multibranches, et les problèmes de fiabilité des techniques de séparation de fonds ont fait augmenter considérablement l'intérêt des pétroliers pour les traitements auto-sélectifs de prévention de venues d'eau pouvant être injectés directement (injection de type "bullhead") dans la formation réservoir, c'est à dire sans isolation de zone par des équipements spécifiques.

Les formulations selon la présente invention ont pour objet de réduire durablement et de façon sélective la perméabilité des zones du réservoir contenant de l'eau, en injectant une formulation d'huile particulière dans les réservoirs.

La formulation d'huile liquide utilisée dans le domaine de l'extraction d'hydrocarbures selon la présente invention comprend au moins les composés suivants :
(a) un composé comprenant au moins 2 fonctions isocyanates, éventuellement bloquées,
(b) un tensioactif, et
(c) une huile aprotique capable de solubiliser les composés (a) et (b).

On entend par huile capable de solubiliser les composés (a) et (b), une huile capable de solubiliser au moins 10 % en poids des composés (a) et (b), notamment à une température de 50°C. On obtient alors une solution monophasique.

Lorsque cette formulation selon l'invention est injectée dans une formation elle génère spontanément une émulsion en présence d'eau, par action des tensioactifs (b) en contact avec l'eau ou le milieu aqueux. Les composés (a) comprenant au moins 2 fonctions isocyanates s'hydrolysant en présence d'eau sous forme d'amine, peuvent ensuite se condenser avec les isocyanates portés par les molécules voisines, notamment selon le schéma réactionnel ci-dessous :

R-NCO +H₂O → R-NH₂ + CO₂

R-NH₂ + R'-NCO → R'-NH-CO-NH-R

En conséquence, lorsque les formulations d'huile selon l'invention sont injectées dans un réservoir, et lorsque de l'huile est rencontrée, la formulation se mélangera de façon miscible avec le pétrole. Par contre, lorsque de l'eau est présente une émulsion sera spontanément générée et par hydrolyse-condensation les interfaces des gouttes d'eau vont se rigidifier et bloquer tout écoulement dans cette zone. Ceci induira un bouchage durable de la zone contenant de l'eau et permettra d'accroître le rendement de production des hydrocarbures.

La formulation selon l'invention permet ainsi une réduction sélective de la perméabilité à l'eau dans les drains de plus forte perméabilité favorisant ainsi: 1) une amélioration de la production (diminution du Water Oil Ratio), 2) un balayage plus efficace des couches de plus faible perméabilité, en général celles qui contiennent de l'huile encore mobilisable, et 3) une diversion de l'eau vers les zones moins perméables et donc les moins bien balayées dans les procédés de drainage par injection d'eau.

Un avantage du procédé mettant en oeuvre les formulations de la présente invention réside aussi dans le fait qu'il peut être appliqué à des formations sans devoir isoler ou protéger la ou les zones productrices d'hydrocarbures durant la phase d'injection de la formulation.

La formulation selon l'invention a de plus comme autres avantages d'être stable, de présenter une viscosité faible et donc d'être facilement injectable dans la formation, et de comprendre des composés chimiques faciles à mettre en solution.

Par ailleurs, de part le fait que ce soit une réaction chimique qui conduit au bouchage, il est possible d'adapter le temps de réaction de l'isocyanate par un ajout de catalyseur ou à l'inverse d'utiliser un isocyanate bloqué ou masqué ne réagissant qu'à haute température. Ainsi, en fonction de la température de la formation, on pourra ajuster la pénétration de la formulation dans la formation. Les portions traitées pourront être relativement épaisses et ce qui limitera les risques de contournement des zones bouchées.

### Composé (a)

Les composés isocyanates selon l'invention sont notamment choisis en fonction de leur solubilité dans l'huile. En effet, les fonctions isocyanates sont polaires et un taux de fonctionnalisation élevé peut en limiter la solubilité dans les huiles les moins polaires. En pratique il est possible d'envisager au-delà de la gamme de monomères, biuret et trimères classiques de réaliser des prépolymères isocyanates de très faible polarité, par exemple par réaction avec des amines grasses.

On utilise des composés comprenant au moins 2 fonctions isocyanates, par exemple 2 ou 3 fonctions isocyanates.

On peut par exemple utiliser les diisocyanates préférentiellement choisis dans la liste suivante : isophorone diisocyanate, toluene diisocyanate, biphényl diisocyanate, dimethoxy-4,4'-biphenyl diisocyanate, dimethyl-4,4'-biphenyl diisocyanate, 1,3-bis(isocyanatomethyl)benzene, phényl diisocyanate, tolylène diisocyanate, diisocyanato hexane, diisocyanato octane, diisocyanato butane, xylène diisocyanate, octaméthylène diisocyanate, et phénylène diisocyanate.

On peut aussi utiliser des polymères de diisocyanates, tels que le poly(hexamethylene diisocyanate). On peut particulièrement utiliser des trimères de diisocyanate, tels que le trimère d'isophorone diisocyanate ou le trimère d'hexaméthylène diisocyanate.

Les composés (a) peuvent éventuellement être masqués ou bloqués, notamment être capables de former une fonction isocyanate in situ sous l'influence de la chaleur. Comme type de fonctions isocyanates bloquées on peut citer les fonctions isocyanates bloquées par des groupements méthyl éthyl ketoxime.

La formulation d'huile peut comprendre un ou plusieurs composés (a). Dans la formulation, la concentration en composé (a) peut être comprise entre 1 et 15 % en poids, notamment entre 3 et 10 % en poids.

On pourra éventuellement ajouter dans la formulation un catalyseur pour la réaction d'hydrolyse condensation des isocyanates, tel que par exemple le 1,4-diazabicyclo[2.2.2]octane (DABCO).

### Composé (b)

Les tensioactifs selon l'invention sont notamment choisis en fonction de leur solubilité dans l'huile. Concernant le choix des tensioactifs, on préfère notamment ceux ayant une basse HLB, ce qui permet de favoriser la formation d'émulsions inverses eau dans huile.

On peut par exemple utiliser comme tensioactifs :
- les acide gras, tel que par exemple l'acide stéarique, l'acide oléique, l'acide linoléique ou l'acide palmitique et/ou leurs mélange. On peut citer par exemple les acides gras de Tall oil (noté TOFA) constitués d'environ 50% d'acide oléïque, de 30 à 40% d'acide linoléïque et de quelques pourcents d'acides stéarique, palmitique et linolénique. Ce produit est disponible commercialement sous le nom Résinoline BD30 fourni par la société DRT. Les acides gras peuvent être utilisés sous leur forme acide, ou totalement ou partiellement neutralisée par une base soluble dans l'huile tel que par exemple la triméthylamine, la triéthylamine ou préférentiellement la N,N-dimethylcyclohexylamine.
- les amides dérives d'acides gras, tel que par exemple les mono- et di-éthanolamide d'acide gras de coco, cocamide commercialisé par Rhodia sous le nom alkamide C212 et alkamide DC-212/S), ou les mono- et di-éthanolamide d'acide érucique.
- les copolymères diblocs d'acrylate hydrophobe et de vinyle pyrolidone, tels que ceux décrits dans la demande WO2003068848 A2
- les copolymères linéaires ou branchés, statistiques ou à blocs, d'oxyde d'éthylène et d'oxyde de propylène, notamment ceux commercialisés par Rhodia sous les dénominations Antarox 17R2, Antarox L61, et Antarox LAEP 15.
- les esters de sorbitan, tel que l'oléate de sorbitan, comme celui commercialisé par la société Rhodia sous le nom Alkamuls SMO, l'isostéarate de sorbitan, le sesquioléate de sorbitan, les esters de sorbitan polyéthoxylés, tel que le monooléate de sorbitan pentacthoxylé ou l'isostéarate de sorbitan pentaéthoxylé.
- les alcools éthoxylés, tels que tridécyl alcool éthoxylé
- les alkyles phénols éthoxylés tels que le nonyl phénol éthoxylé, l'octyl phénol éthoxylé, notamment avec un nombre d'éthoxylation inférieur à 2.
- les tensioactifs ioniques tels que par exemple les alkyle alcool éthoxy phosphates, les tristyrilphénol éthoxy sulfates, les dodécylbenzène sulfonates, et les C₁₄₋₁₆ oléfine sulfonates.
- les tensioactifs zwitterioniques tels que par exemple le cocamidopropyl bétaine, cocamidopropyl hydroxy sultaine.
- les tensioactifs émulsifiants polymériques, notamment ceux vendus sous les dénominations "Hypermer" et "Arlacel" par la société ICI, et décrits dans les brevets US4,504,276, US4,509,950, et US4,776,966.

La formulation d'huile peut comprendre un ou plusieurs tensioactifs (b). Dans la formulation, la concentration en tensioactif (b) peut être comprise entre 0,5 et 20 % en poids, notamment entre 1 et 10% et plus préférentiellement entre 3 et 6% en poids.

On peut également ajouter à la formulation un composé capable de neutraliser le tensioactif, tel que par exemple une amine tertiaire, comme la N,N-dimethyl cyclohexylamine (DMCHA).

### Huile (c)

L'huile aprotique utilisée selon l'invention est notamment non miscible à l'eau et miscible aux hydrocarbures. Comme explicité précédemment, l'huile est aprotique dans la mesure où des systèmes protiques réagiraient avec des isocyanates dès le mélange.

On considère comme huile tout liquide, dans des conditions normales de température, hydrophobe et lipophile de faible polarité. A titre indicatif, on peut considérer comme faible polarité tout liquide dont la composante polaire (notée δp) définie selon les paramètres de Hansen est inférieur ou égal à 8 (J/cm³)^{1/2}.

L'huile (c) peut être une huile organique, une huile végétale ou une huile d'origine minérale.

Dans le cas d'une huile organique, il peut s'agir d'acides gras saturés ou insaturés, d'esters d'acides gras saturés ou insaturés, tel que par exemple l'ester diisobutyrique ou l'ester diethylique), ou d'un solvant organique tel que par exemple le xylène.

Dans le cas d'une huile d'origine minérale, il peut s'agir de tout type de coupe de pétrole tel que les huiles minérales paraffiniques ou les huiles naphténiques comme par exemple les diesels, l'Isopar L, l'Exxsol D100 ou le Solvesso 200.

Dans le cas d'une huile végétale, il peut s'agir d'une huile de palme, de colza, de lin, ou de tournesol.

La formulation d'huile peut parfaitement comprendre une ou plusieurs huiles (c).

La formulation présente préférentiellement une viscosité d'écoulement comprise entre 10 et 1000 cP et plus préférentiellement inférieure à 100 cP, notamment à une température de 50°C.

Il est également possible d'ajouter tout types d'additifs à la formulation selon l'invention, notamment ceux classiquement utilisés dans le domaine de l'extraction pétrolière.

Comme formulation particulièrement appropriée pour l'invention on peut citer les formulations suivantes :

| **Formulations** | **(a)** | **(b)** | **(c)** |
|---|---|---|---|
| 1 | trimère d'isophorone diisocyanate | TOFA | huile de palme |
| 2 | trimère d'isophorone diisocyanate | mélange TOFA et diméthylcyclohexylamine | huile de palme |
| 3 | trimère d'hexamethylène diisocyanate | mélange TOFA, diméthylcyclohexylamine et alkyl alcohol éthoxy phosphate | huile de palme |
| 4 | mélange trimère d'hexamethylène diisocyanate et trimère d'isophorone diisocyanate | mélange TOFA et diméthylcyclohexylamine | diisobutyl acétate |
| 5 | trimère d'hexamethylène diisocyanate | mélange TOFA et diméthylcyclohexylamine | solvesso 200 |
| 6 | trimère d'hexamethylène diisocyanate | mélange TOFA, diméthylcyclohexylamine et alkyl alcohol éthoxy phosphate | xylène |

Les constituants de la formulation étant miscibles, la formulation peut être réalisée par mélange, notamment au moyen de mélangeurs, éventuellement en utilisant des pompes doseuses adaptées au volume de formulation à réaliser. Pour des raisons pratiques, les constituants (a) et (b) pourront être préalablement assemblés et stockés pour n'être mélangés à l'huile (c) qu'au moment de l'utilisation.

La présente invention concerne également un procédé de traitement des formations souterraines dans lequel on injecte au moins une formulation d'huile selon la présente invention. On peut éventuellement injecter la formulation dans les formations souterraines par l'intermédiaire de puits.

Les quantités de formulation injectées seront généralement de l'ordre de 10% à 90% et préférentiellement de 20 à 80% du volume poreux de la zone de roche à traiter.

Le domaine d'utilisation de la présente demande s'adresse notamment à des réservoirs dont la température est comprise entre 20°C et 300°C, de préférence entre 60°C et 250°C. La salinité de l'eau dans ces réservoirs est généralement comprise entre 0,1 g/l et 350 g/l TDS, de préférence entre 0,1 g/l et 100 g/l TDS.

La formulation peut être injectée dans les formations souterraines notamment par les puits d'injection et/ou les puits de production ; les puits pouvant être des puits verticaux, horizontaux ou des puits à architecture complexe. Les puits peuvent par exemple être en trous ouverts ou o complétés en "gravel pack", trous tubés perforés, ou crépines.

La formulation est appropriée pour tout type de formations souterraines, notamment les formations à base de roches mouillables à l'eau ou a l'huile.

L'invention concerne ainsi l'utilisation d'une formulation d'huile telle que défini précédemment dans le domaine de l'extraction d'hydrocarbures pour la prévention des venues d'eau, le contrôle de profils, le balayage des réservoirs (chemical flooding), la consolidation des sables, l'étanchéification de remblais, ou l'abandon de zones.

L'invention concerne aussi une émulsion eau-dans-huile utilisée dans le domaine de l'extraction d'hydrocarbures dans laquelle la phase continue comprend de l'huile (c) et l'interface entre l'eau est l'huile est totalement ou partiellement recouverte d'un polymère de type polyurée obtenu par hydrolyse et condensation d'un composé (a).

L'invention a aussi pour objet la fabrication d'une émulsion eau-dans-huile telle que définie précédemment dans lequel,on met en contact une formulation selon l'invention avec un milieu aqueux. On peut éventuellement former ladite émulsion par agitation.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Les composés utilisés sont mentionnés dans le tableau 1 :

**Tableau 1**

| | **Composés** | **% actif** | **Fournisseur** |
|---|---|---|---|
| Huile | Huile de palme raffinée | 100 % | Fluka |
| Isocyanate | Tolonate X IDT 70B Rhodocoat X EZ-D450 | 70 % 70% | Rhodia |
| Tensioactif | Tall Oil Fatty Acid (TOFA) | 100% | Novance |
| Neutralisant | N,N-dimethyl cyclohexylamine (DMCHA) | 100% | Aldrich |

Les différents composés sont à l'état liquide et sont mélangés sans précautions particulières sous agitation d'un barreau magnétique, pour obtenir la formulation mentionnée dans le tableau 2 :

**Tableau 2**

| **Composés** | **(g)** | **% actif** |
|---|---|---|
| Huile de palme raffinée | 20 | / |
| Tolonate X IDT 70B | 2 | 6,1 |
| TOFA | 0,6 | 2,6 |
| DMCHA | 0,2 | 0,9 |

Cette formulation est émulsionnée avec une solution aqueuse de NaCl à 2% ; cette concentration en sel étant représentative de l'eau rencontrée dans certains réservoirs. On choisit un ratio eau/huile=50/50 % massique. L'émulsification se fait spontanément et le mélange est simplement homogénéisé en secouant les piluliers.

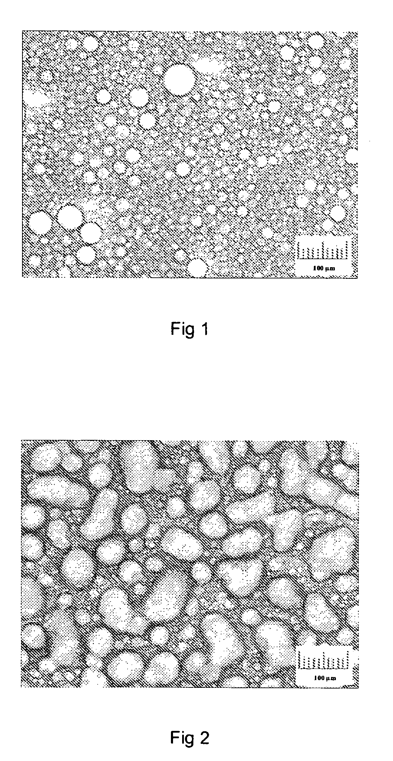

L'émulsion ainsi formée est une dispersion d'eau dans l'huile et la distribution de taille des particules est relativement large avec des particules comprises entre 1 et 100 µm, comme observé à la Figure 1. Cette émulsion placée à une température de 65°C durcit en quelques heures. Après 24 heures, l'émulsion rigidifiée présente des tailles de gouttes plus grosses que dans l'émulsion initiale mais toujours avec une taille maximale d'approximativement 100 µm, comme observé à la Figure 2.

La Figure 1 représente une image prise au microscope (grossissement x100) de l'émulsion huile formulée/eau de la partie expérimentale, après mélange.

La Figure 2 représente une image prise au microscope (grossissement X100) de l'émulsion huile formulée/eau de la partie expérimentale, après 24 heures à 65°C.

Par ailleurs, l'émulsion chauffée devient solide après quelques heures à 90°C.

Des mesures de rhéologie sont réalisées afin d'estimer le temps de prise de ces émulsions ainsi que leur propriétés mécaniques. Les modules élastique et de perte de l'émulsion sont mesurés en fonction du temps à l'aide d'un rhéomètre AR2000 (TA Instrument, Surrey, Grande-Bretagne), équipé d'une géométrie hélicoïdale assimilée à une géométrie de type couette.

On reporte au tableau 3 les valeurs des modules élastiques (G') en fonction du temps pour la formulation seule ainsi que pour l'émulsion comportant 50% de la formulation et 50% d'eau contenant 2% de NaCl, ces deux échantillons étant placés à 90°C.

**Tableau 3**

| **Temps (min)** | **G' (formulation) (Pa)** | **G' (émulsion) (Pa)** |
|---|---|---|
| 5 | non mesurable | 0,5 |
| 60 | 0,015 | 290 |
| 120 | 0,013 | 690 |

On observe ainsi que le module élastique de la formulation selon l'invention reste constant avec des valeurs très faibles à la limite de la sensibilité de mesure de l'appareil. Dans le cas de l'émulsion, on observe une augmentation très importante du module élastique traduisant la solidification de l'émulsion.

Ces essais montrent que la formulation d'huile reste stable dans les conditions de température d'application soit ici 90°C. Ainsi, si une roche contenant de l'huile est rencontrée le système restera fluide et l'écoulement restera possible. A contrario, si de l'eau est rencontrée, l'émulsion formée par la formulation à son contact durcira en quelques heures et le solide ainsi formé bouchera de façon permanente cette zone.

## Revendications

1. Formulation d'huile liquide utilisée dans le domaine de l'extraction d'hydrocarbures, comprenant au moins les composés suivants :
(a) un composé comprenant au moins 2 fonctions isocyanates, éventuellement bloquées,
(b) un tensioactif, et
(c) une huile aprotique capable de solubiliser les composés (a) et (b).

2. Formulation selon la revendication 1, caractérisée en ce le composé (a) est un diisocyanate choisi dans le groupe comprenant: isophorone diisocyanate, toluene diisocyanate, biphényl diisocyanate, dimethoxy-4,4'-biphenyl diisocyanate, dimethyl-4,4'-biphenyl diisocyanate, 1,3-bis(isoçyanatomethyl)benzene, phényl diisocyanate, tolylène diisocyanate, diisocyanato hexane, diisocyanato octane, diisocyanato butane, xylène diisocyanate, octaméthylène diisocyanate, et phénylène diisocyanate.

3. Formulation selon la revendication 1, caractérisée en ce le composé (a) est un polymère de diisocyanate tel que les trimères de diisocyanate, tels que le trimère d'isophorone diisocyanate ou le trimère d'hexaméthylène diisocyanate.

4. Formulation selon l'une quelconque des revendications 1 à 3, **caractérisée en ce que** la concentration en composé (a) est comprise entre 1 et 15 % en poids.

5. Formulation selon l'une quelconque des revendications 1 à 4, **caractérisée en ce que** le tensioactif (b) est choisi dans le groupe comprenant :
- les acide gras, notamment sous leur forme acide ou totalement ou partiellement neutralisée par une base soluble dans l'huile
- les amides dérives d'acides gras
- les copolymères diblocs d'acrylate hydrophobe et de vinyle pyrolidone
- les copolymères linéaires ou branchés, statistiques ou à blocs, d'oxyde d'éthylène et d'oxyde de propylène
- les esters de sorbitan
- les alcools éthoxylés
- les alkyles phénols éthoxylés
- les tensioactifs ioniques
- les tensioactifs zwitterioniques
- les tensioactifs émulsifiants polymériques

6. Formulation selon l'une quelconque des revendications 1 à 5, **caractérisée en ce que** le tensioactif (b) est un mélange d'acide gras.

7. Formulation selon l'une quelconque des revendications 1 à 6, **caractérisée en ce que** la concentration en tensioactif (b) est comprise entre 0,5 et 20 % en poids.

8. Formulation selon l'une quelconque des revendications 1 à 7, **caractérisée en ce que** l'huile (c) est une huile organique, une huile d'origine minérale ou une huile végétale.

9. Formulation selon l'une quelconque des revendications 1 à 8, **caractérisée en ce que** l'huile (c) est choisi dans le groupe comprenant : les acide gras saturés ou insaturés, les esters d'acides gras saturés ou insaturés, les solvants organiques, les huiles minérales paraffiniques, les huiles naphténiques, l'huile de palme, de colza, de lin, ou de tournesol.

10. Procédé de fabrication d'une formulation selon l'une quelconque des revendications 1 à 9, **caractérisée en ce qu'**on mélange au moins les composés (a), (b) et (c).

11. Procédé de traitement des formations souterraines dans lequel on injecte au moins une formulation selon l'une quelconque des revendications 1 à 9.

12. Procédé selon la revendication 11, **caractérisé en ce que** ladite formulation est injectée dans les formations souterraines par l'intermédiaire de puits d'injection et/ou les puits de production.

13. Utilisation d'une formulation selon l'une quelconque des revendications 1 à 9 pour la prévention des venues d'eau, le contrôle de profils, le balayage des réservoirs (chemical flooding), la consolidation des sables, l'étanchéification de remblais, ou l'abandon de zones.

14. Emulsion eau-dans-huile utilisée dans le domaine de l'extraction d'hydrocarbures dans laquelle la phase continue comprend de l'huile (c) et l'interface entre l'eau et l'huile est totalement ou partiellement recouverte d'un polymère de type polyurée obtenu par hydrolyse et condensation d'un composé (a) ; les composés (a) et (c) étant définis dans les revendications précédentes.

15. Procédé de fabrication d'une émulsion eau-dans-huile selon la revendication 14, **caractérisé en ce que** l'on met en contact une formulation selon l'une quelconque des revendications 1 à 9, avec un milieu aqueux.

## Claims

1. Liquid oil formulation used in the field of hydrocarbon extraction, comprising at least the following compounds:
(a) a compound comprising at least two optionally blocked isocyanate functional groups;
(b) a surfactant; and
(c) an aromatic oil capable of dissolving compounds (a) and (b).

2. Formulation according to Claim 1, **characterized in that** compound (a) is a diisocyanate chosen from the group comprising: isophorone diisocyanate, toluene diisocyanate, biphenyl diisocyanate, dimethoxy-4,4'-biphenyl diisocynate, dimethyl-4,4'-biphenyl diisocyanate, 1,3-bis(isocyanatomethyl)benzene, phenyl diisocyanate, tolylene diisocyanate, diisocynatohexane, diisocyanatooctane, diisocyanatobutane, xylene diisocyanate, octamethylene diisocyanate and phenylene diisocyanate.

3. Formulation according to Claim 1, **characterized in that** compound (a) is a diisocyanate polymer such as diisocyanate trimers, for example isophorone diisocyanate trimer or hexamethylene diisocyanate trimer.

4. Formulation according to any one of Claims 1 to 3, **characterized in that** the concentration of compound (a) is between 1 and 15% by weight.

5. Formulation according to any one of Claims 1 to 4, **characterized in that** the surfactant (b) is chosen from the group comprising:
- fatty acids, especially in their acid form or their form completely or partially neutralized by a base soluble in the oil;
- amides derived from fatty acids;
- hydrophobic acrylate/vinyl pyrrolidone diblock copolymers;
- linear or branched ethylene oxide/propylene oxide random or block copolymers;
- sorbitan esters;
- ethoxylated alcohols;
- ethoxylated alkyl phenols
- ionic surfactants;
- zwitterionic surfactants;
- polymeric emulsifying surfactants.

6. Formulation according to any one of Claims 1 to 5, **characterized in that** the surfactant (b) is a mixture of fatty acids.

7. Formulation according to any one of Claims 1 to 6, **characterized in that** the concentration of surfactant (b) is between 0.5 and 20 % by weight.

8. Formulation according to any one of Claims 1 to 7, **characterized in that** the oil (c) is an organic oil, a mineral oil or a vegetable oil.

9. Formulation according to any one of Claims 1 to 8, **characterized in that** the oil (c) is chosen from a group comprising: saturated or unsaturated fatty acids, saturated or unsaturated fatty acid esters, organic solvents, paraffinic mineral oils, naphthenic oils, palm oil, rapeseed oil, linseed oil and sunflower oil.

10. Process for manufacturing a formulation according to any one of Claims 1 to 9, **characterized in that** at least compounds (a), (b) and (c) are mixed together.

11. Method of treating subterranean formations into which at least one formulation according to any one of Claims 1 to 9 is injected.

12. Method according to Claim 11, **characterized in that** said formulation is injected into the subterranean formations by means of injection wells and/or production wells.

13. Use of a formulation according to any one of Claims 1 to 9, for the prevention of water penetration, profile control, chemical flooding, sand consolidation, waste-fill sealing or zone abandonment.

14. Water-in-oil emulsion used in the field of hydrocarbon extraction, in which the continuous phase comprises oil (c) and the water/oil interface is completely or partially covered with a polyurea-type polymer obtained by hydrolysis and condensation of compound (a), compounds (a) and (c) being defined in the preceding claims.

15. Process for manufacturing a water-in-oil emulsion according to Claim 14, **characterized in that** a formulation according to any one of Claims 1 to 9 is brought into contact with an aqueous medium.

## Patentansprüche

1. Flüssige Ölformulierung zur Verwendung auf dem Gebiet der Förderung von Kohlenwasserstoffen, mindestens die folgenden Verbindungen umfassend:
(a) eine Verbindung, die mindestens 2 funktionelle Isocyanatgruppen aufweist, die möglicherweise geschützt sind,
(b) einen grenzflächenaktiven Stoff, und
(c) ein aprotisches Öl, das dazu befähigt ist, die Verbindungen (a) und (b) in Lösung zu bringen.

2. Formulierung nach Anspruch 1, **dadurch gekennzeichnet, dass** die Verbindung (a) ein Diisocyanat ist, das aus der Gruppe ausgewählt ist, die Folgendes umfasst: Isophorondiisocyanat, Toluoldiisocyanat, Biphenyldiisocyanat, 4,4'-Dimethoxybiphenyldiisocyanat, 4,4'-Dimethylbiphenyldiisocyanat, 1,3-bis(Isocyanatomethyl)benzol, Phenyldiisocyanat, Tolylendiisocyanat, Diisocyanatohexan, Diisocyanatooctan, Diisocyanatobutan, Xyloldiisocyanat, Octamethylendiisocyanat und Phenylendiisocyanat.

3. Formulierung nach Anspruch 1, **dadurch gekennzeichnet, dass** die Verbindung (a) ein Diisocyanatpolymer ist, wie etwa die Trimere von Diisocyanat, wie etwa das Trimer von Isophorondiisocyanat oder das Trimer von Hexamethylendiisocyanat.

4. Formulierung nach einem beliebigen der Ansprüche 1 bis 3, **dadurch gekennzeichnet, dass** die Konzentration an Verbindung (a) im Bereich von 1 bis 15 Gewichts-% liegt.

5. Formulierung nach einem beliebigen der Ansprüche 1 bis 4, **dadurch gekennzeichnet, dass** der grenzflächenaktive Stoff (b) aus der Gruppe ausgewählt ist, die Folgendes umfasst:
- Fettsäuren, insbesondere in Säurenform oder vollständig oder teilweise mit einer öllöslichen Base neutralisiert
- Fettsäureamide
- Diblockcopolymere aus hydrophobem Acrylat und aus Vinylpyrrolidon
- geradkettige oder verzweigte Copolymere statistischen Aufbaus oder aus Blöcken, von Ethylenoxid und Propylenoxid
- Sorbitanester
- ethoxylierte Alkohole
- ethoxylierte Alkylphenole
- ionische grenzflächenaktive Stoffe
- zwitterionische grenzflächenaktive Stoffe
- polymere emulgierende grenzflächenaktive Stoffe

6. Formulierung nach einem beliebigen der Ansprüche 1 bis 5, **dadurch gekennzeichnet, dass** der grenzflächenaktive Stoff (b) eine Fettsäuremischung ist.

7. Formulierung nach einem beliebigen der Ansprüche 1 bis 6, **dadurch gekennzeichnet, dass** die Konzentration an grenzflächenaktivem Stoff (b) im Bereich von 0,5 bis 20 Gewichts-% liegt.

8. Formulierung nach einem beliebigen der Ansprüche 1 bis 7, **dadurch gekennzeichnet, dass** das Öl (c) ein organisches Öl, ein Öl mineralischer Herkunft oder ein pflanzliches Öl ist.

9. Formulierung nach einem beliebigen der Ansprüche 1 bis 8, **dadurch gekennzeichnet, dass** das Öl (c) aus der Gruppe gewählt ist, die Folgendes umfasst: gesättigte oder ungesättigte Fettsäuren, gesättigte oder ungesättigte Fettsäureester, organische Lösemittel, paraffinische Mineralöle, naphthenische Öle, Palm-, Raps-, Lein- oder Sonnenblumenöl.

10. Verfahren zur Herstellung einer Formulierung nach einem beliebigen der Ansprüche 1 bis 9, **dadurch gekennzeichnet, dass** mindestens die Verbindungen (a), (b) und (c) vermischt werden.

11. Verfahren zur Behandlung von unterirdischen Formationen, wobei mindestens eine Formulierung gemäß einem beliebigen der Ansprüche 1 bis 9 eingepresst wird.

12. Verfahren nach Anspruch 11, **dadurch gekennzeichnet, dass** die Formulierung über Pressschächte und/oder Förderschächte in die unterirdischen Formationen eingepresst wird.

13. Verwendung einer Formulierung nach einem beliebigen der Ansprüche 1 bis 9 zur Verhinderung von Wassereinbrüchen, zur Profilkontrolle, zum Fluten von Lagerstätten (chemical flooding), zur Verfestigung von Sanden, zur Abdichtung von Versatzgut oder zum Stilllegen von Bereichen.

14. Wasser-in-Öl-Emulsion zur Verwendung auf dem Gebiet der Förderung von Kohlenwasserstoffen, wobei die kontinuierliche Phase Öl (c) umfasst und die Grenzfläche zwischen dem Wasser und dem Öl vollständig oder teilweise von einem Polymer des Typs Polyharnstoff bedeckt ist, welches durch Hydrolyse und Kondensation einer Verbindung (a) erhalten wird; wobei die Verbindungen (a) und (c) in den vorhergehenden Ansprüchen definiert sind.

15. Verfahren zur Herstellung einer Wasser-in-Öl-Emulsion nach Anspruch 14, **dadurch gekennzeichnet, dass** eine Formulierung gemäß einem beliebigen der Ansprüche 1 bis 9 mit einem wässrigen Milieu in Kontakt gebracht wird.
